# EUROPÄISCHE PATENTSCHRIFT

(11) **EP 2 307 900 B1**
(45) Veröffentlichungstag und Bekanntmachung des Hinweises auf die Patenterteilung: **25.03.2015**
(21) Anmeldenummer: 09779545.4
(22) Anmeldetag: 26.05.2009
(51) Int. Cl.: G01S 19/42, G01S 19/31

(54) **VORRICHTUNG UND VERFAHREN ZUR BESTIMMUNG EINER POSITION**
DEVICE AND METHOD FOR DETERMINING A POSITION
DISPOSITIF ET PROCÉDÉ DE DÉTERMINATION D'UNE POSITION

(30) Priorität: 21.07.2008 DE 102008040582
(43) Veröffentlichungstag der Anmeldung: 13.04.2011
(73) Patentinhaber: Robert Bosch GmbH, 70442 Stuttgart (DE)
(72) Erfinder: VOGEL, Andreas, 31139 Hildesheim (DE); DEDERER, Rudolf, 31134 Hildesheim (DE); MAY, Thomas, 38302 Wolfenbuettel (DE); WOLF, Karen, Insa, 30163 Hannover (DE); WALOSSEK, Erik, 31139 Hildesheim (DE); JAKOBLEW, Sascha, 31141 Hildesheim (DE)
(86) Internationale Anmeldenummer: PCT/EP2009/056363
(87) Internationale Veröffentlichungsnummer: WO 2010/009924

(56) Entgegenhaltungen:
- EP-A- 1 586 916
- EP-A- 1 873 546
- EP-A- 1 876 467
- US-A- 5 768 319
- US-A1- 2005 162 312
- US-A1- 2006 055 598
- US-A1- 2007 247 354
- US-B1- 6 714 159

## Beschreibung

Die Erfindung betrifft ein Verfahren zur Bestimmung einer Position mittels eines Empfängers zum Empfang von Satellitensignalen, bei welchem die Bahndaten der Satelliten durch mindestens ein von mindestens einem Satelliten ausgesandtes Signal an den Empfänger übermittelt und die Laufzeit mehrerer Satellitensignale gemessen wird, um die Position relativ zur Satellitenposition zu bestimmen.

Verfahren der Eingangs genannten Art werden beispielsweise für die Fahrzeugnavigation, die Vermessung und den Freizeitsport verwendet, um eine Position auf der Erdoberfläche oder im erdnahen Bereich mit einer Genauigkeit von etwa 100 m bis etwa 1 cm zu bestimmen.

Ein bekanntes Verfahren zur Bestimmung einer Position arbeitet mit derzeit 24 aktiven Satelliten, welche in einer Höhe von 20180 km auf sechs verschiedenen Bahnen die Erde umkreisen. Die Bahnebenen sind um 55° zur Äquatorebene geneigt. Dadurch besteht bei freier Sicht von jedem Punkt der Erde jederzeit eine Funkverbindung zu mindestens vier Satelliten. Jeder Satellit sendet seine genaue Zeit, seinen Status und seine Bahnkoordinaten. Mit Hilfe der Bahnkoordinaten ist zu jedem Zeitpunkt von jedem Satelliten die genaue Position bekannt.

Mittels einer Laufzeitmessung der Funksignale kann die relative Position des Empfängers zu einem Satelliten bestimmt werden. Dazu werden die Laufzeiten der Signale von mindestens vier Satelliten benötigt, um die drei Ortskoordinaten und den Versatz der Uhr des Empfängers zu bestimmen. Mit Annahmen über die Höhe des Empfängers über NN oder über die Zeitreferenz des Empfängers genügen weniger Satellitensignale.

Meist stehen jedoch unmittelbar nach dem Einschalten eines Empfängers keine gültigen Bahndaten der Satelliten zur Verfügung. Diese müssen daher zunächst von den Satelliten übertragen werden. Während dieser Zeitspanne können zwar Signale empfangen und ausgewertet werden, da jedoch die Position des sendenden Satelliten nicht bekannt ist, können aus diesen Signalen keine gültigen Positionsangaben berechnet werden.

Da das Satellitensignal nur mit geringer Intensität auf der Erde empfangbar ist und ein schlechtes Signal/Rauschverhältnis aufweist, ist auch die von den Satelliten übertragbare Datenrate nur gering. Daher dauert die Übertragung der Bahndaten von den Satelliten bei den bisher bekannten Systemen typischerweise 30 sek. Sofern die Signalqualität verschlechtert ist, beispielsweise durch Bewegung des Empfängers, durch Abschattungen oder Signalreflexionen, kann sich die zur Übertragung der Bahndaten benötigte Zeit erheblich vergrößern.

Um dem Benutzer die Wartezeit bis zur ersten Positionsangabe nach dem Einschalten seines Empfängers zu ersparen, wird in der US 2006/0055598 A1 vorgeschlagen, dem Empfänger nach dem Einschalten über eine weitere Datenverbindung Bahndaten der Satelliten zur Verfügung zu stellen. Hierfür kann beispielsweise eine GSM- oder eine UMTS-Verbindung verwendet werden. Der Aufbau einer Mobilfunkverbindung ist aber ebenfalls mit einer Verzögerung und mit Kosten verbunden.

US 6 714 159 B1 schlägt vor, nach dem Einschalten eines GPS-Empfängers empfangene Codephasen-Informationen abzuspeichern, falls keine passenden Ephemeriden vorliegen. Die Position des Empfängers zu den abgespeicherten Informationen wird erst bestimmt, wenn die Epheriden empfangen wurden.

Ausgehend vom Stand der Technik liegt der Erfindung daher die Aufgabe zugrunde, die Position eines Empfängers zur Erfassung von Satellitensignalen für einen Zeitraum bis zum Vorliegen gültiger Bahndaten mit hoher Genauigkeit zu bestimmen.

Die Aufgabe wird erfindungsgemäß gelöst durch eine Vorrichtung zur Bestimmung einer Postition, enthaltend Datenerfassüngsmittel zur Erfassung von Satellitensignalen, welche dazu eingerichtet sind, Informationen über Satellitenstandorte durch mindestens ein von mindestens einem Satelliten ausgesandtem Signal zu empfangen und die Laufzeit mehrerer Satellitensignale zu messen, wobei Datenverarbeitungsmittel vorgesehen sind, um die Position relativ zur jeweiligen Satellitenposition zu bestimmen und eine Speichereinrichtung vorhanden ist, in welcher zumindest in einem ersten Zeitraum vor dem vollständigen Empfang der Satellitenpositionen die von mindestens einem Satelliten ausgesandten Signale zumindest teilweise speicherbar sind und die Datenverarbeitungsmittel dazu eingerichtet sind, in einem zweiten Zeitraum nach dem vollständigen Empfang der Satellitenstandorte zumindest eine Position zu bestimmen, an welcher sich die Vorrichtung im ersten Zeitraum vor dem vollständigen Empfang der Satellitenstandorte befunden hat. Dabei wird im ersten Zeitraum von den gesamten von dem Satelliten empfangenen Daten lediglich eine Unterauswahl in Form einer Trägerphase gespeichert.

Weiterhin besteht die Lösung der Aufgabe in einem Verfahren zur Bestimmung einer Position mittels eines Empfängers zum Empfang von Satellitensignalen, bei welchem die Bahndaten der Satelliten durch mindestens ein von mindestens einem Satelliten ausgesandtes Signal an den Empfänger übermittelt und die Laufzeit mehrerer Satellitensignale gemessen wird, um die Position relativ zur Satellitenposition zu bestimmen, wobei zumindest in einem ersten Zeitraum vor dem vollständigen Empfang der Satellitenstandorte die von mindestens einem Satelliten ausgesandten Signale zumindest teilweise gespeichert werden und in einem zweiten Zeitraum nach dem vollständigen Empfang der Satellitenstandorte zumindest eine Position bestimmt wird, an welcher sich der Empfänger im ersten Zeitraum vor dem vollständigen Empfang der Satellitenstandorte befunden hat. Dabei wird im ersten Zeitraum von den gesamten von dem Satelliten empfangenen Daten lediglich eine Unterauswahl in Form einer Trägerphase gespeichert.

Erfindungsgemäß werden ein Verfahren und eine Vorrichtung vorgeschlagen, mit welchem eine Position, d.h. ein Standort, auf der Erdoberfläche bestimmt werden kann. Weiterhin kann die erfindungsgemäße Vorrichtung und das erfindungsgemäße Verfahren dazu verwendet werden, eine Position in einem erdnahen Bereich zu bestimmen, beispielsweise die Position eines Flugzeuges. Die Position kann dabei beispielsweise mittels eines Längen- und eines Breitengrades, in UTM-Koordinaten oder in einem anderen, bekannten Format angegeben werden.

Zur Ermittlung der Position stehen Satellitensignale zur Verfügung, welche von einer Empfangseinrichtung empfangen werden. Dabei bestimmt die Empfangseinrichtung in an sich bekannter Weise die Laufzeit des Satellitensignals vom Sender zum Empfänger. Aus der Laufzeit kann der Abstand zum Sender ermittelt werden. Sofern die Position des Senders bekannt ist, beispielsweise aus Bahndaten der Satelliten, kann durch Auswertung mehrerer Satellitensignale, welche von verschiedenen Satelliten ausgehen, eine Position auf der Erdoberfläche oder im erdnahen Bereich ermittelt werden.

Da die Bahndaten der Satelliten einer ständigen Schwankung unterliegen, werden diese Bahndaten dem Satellitensignal aufmoduliert, so dass die Bahndaten dem Empfänger zur Verfügung stehen. In einer Ausführungsform der Erfindung kann vorgesehen sein, dass ein sendender Satellit nur seine eigenen Bahndaten überträgt. In einer anderen Ausführungsform der Erfindung können von einem Satelliten Bahndaten mehrerer benachbarter Satelliten übertragen werden. In einer weiteren Ausführungsform der Erfindung kann ein Satellit sowohl Bahndaten seiner eigenen Bahn als auch Bahndaten benachbarter Satelliten übertragen, wobei die Bahndaten benachbarter Satelliten lediglich eine Grobstruktur der Bahnen beschreiben und die Daten, welche die eigene Bahn betreffen, eine Beschreibung der Bahn mit geringeren Toleranzen gestatten.

Um eine Position zu bestimmen, muss der Empfänger somit sowohl die Laufzeit mindestens eines Signals pro Satellit bestimmen als auch die Bahndaten dieses Satelliten zur Verfügung haben. Wird ein Empfänger gemäß dem Stand der Technik nun vor dem Empfang der vollständigen Bahndaten bewegt, so kann der Ursprung oder der Verlauf dieser Bewegung auch nach Empfang der Bahndaten nicht mehr zurückverfolgt werden. Zur Lösung dieses Problems wird erfindungsgemäß vorgeschlagen, die Satellitensignale zumindest teilweise im Empfänger zwischen zu speichern und nach Empfang der Bahndaten aus den gespeicherten Satellitendaten den Ursprung der Bewegung und/oder den Bewegungsverlauf bis zum Vorliegen der vollständigen Bahndaten zu rekonstruieren.

In einer Ausführungsform der Erfindung wird die Phasenlage der Trägerfrequenz der von mindestens einem Satelliten ausgesandten Signale im Empfänger bestimmt und gespeichert.

In einer Weiterbildung der Erfindung können die gespeicherten Satellitensignale mit einer Zeitinformation über den Zeitpunkt der Speicherung versehen werden, um auf diese Weise auch zu rekonstruieren, zu welchem Zeitpunkt sich der Empfänger an welchem Ort befunden hat. Auf diese Weise kann durch Differenzierung auch ein Geschwindigkeitsprofil erzeugt werden.

In einer Weiterbildung der Erfindung, kann Speicherplatz gespart werden, in dem nicht das vollständige Satellitensignal zur Zwischenspeicherung vorgesehen wird, sondern nur der zur Bestimmung der Laufzeit erforderliche Teil. Insbesondere können die zu speichernden Daten ausgewählt sein aus der Sendefrequenz, der Dopplerverschiebung, der Codephase und/oder der Trägerphase.

In einer bevorzugten Ausführungsform der Erfindung wird vorgeschlagen, die von mindestens einem Satelliten ausgesandten Signale zumindest teilweise über eine Zeitspanne von etwa 48 sek. bis etwa 96 sek. zu speichern. Innerhalb dieser Zeitspanne können die Bahndaten der beteiligten Satelliten zwei bis viermal empfangen werden, so dass auch bei gestörtem Empfang und der Forderung nach Redundanz der empfangenen Daten zur Fehlererkennung eine zuverlässige Übertragung der Bahndaten in den meisten Fällen möglich ist.

In einer Weiterbildung der Erfindung kann vorgesehen sein, dass die gespeicherten Signale von mindestens einem Satelliten zumindest teilweise wieder aus dem Speicher gelöscht werden, wenn bei einem drohenden Speicherüberlauf noch keine gültigen Bahndaten empfangen wurden. Dabei werden bevorzugt diejenigen Daten zum Löschen ausgewählt, welche von den gespeicherten Daten nur einen geringen Zuwachs an Genauigkeit der Positionsbestimmung bieten. Ziel der Auswahl der zu löschenden Daten soll jedoch sein, möglichst den gesamten Weg vor der ersten Positionsbestimmung mit hinreichender Genauigkeit zu rekonstruieren.

In einer bevorzugten Ausführungsform der Erfindung können die rekonstruierten Positionen, an welchen sich der Empfänger im ersten Zeitraum vor dem vollständigen Empfang der Satellitenstandorte befunden hat, einer Plausibilisierung unterzogen werden. Eine solche Plausibilisierung kann beispielsweise vorsehen, die Geschwindigkeit zwischen zwei aufeinander folgenden Positionen zu berechnen und mit einer Maximal- oder Durchschnittsgeschwindigkeit zu vergleichen, mit welcher der Empfänger in einem Fahr- oder Flugzeug bewegt wurde. Weiterhin kann die rekonstruierte Position mit einer bekannten Geländetopologie verglichen werden. Beispielsweise kann gefordert sein, dass die rekonstruierten Positionen auf einer Straße liegen müssen.

Nachfolgend soll die Erfindung anhand von Figuren ohne Beschränkung des allgemeinen Erfindungsgedankens näher erläutert werden.
- Fig. 1: zeigt ein Flussdiagramm einer ersten Variante des erfindungsgemäßen Verfahrens.
- Fig. 2: zeigt ein Flussdiagramm einer zweiten Alternative des erfindungsgemäß vorgeschlagenen Verfahrens.
- Fig. 3: zeigt ein Blockschaltbild der erfindungsgemäßen Vorrichtung in einer ersten Variante.
- Fig. 4: zeigt ein Blockschaltbild der erfindungsgemäß vorgeschlagenen Vorrichtung in einer zweiten Variante.

Die Erfindung wird nachfolgend anhand des in Betrieb befindlichen Navigationssystems NAVSTAR-GPS beschrieben. Dem Fachmann ist jedoch selbstverständlich geläufig, dass das offenbarte Lösungsprinzip auch für vergleichbare Systeme, wie beispielsweise GLONASS, GALILEO, oder COMPASS angewendet werden kann.

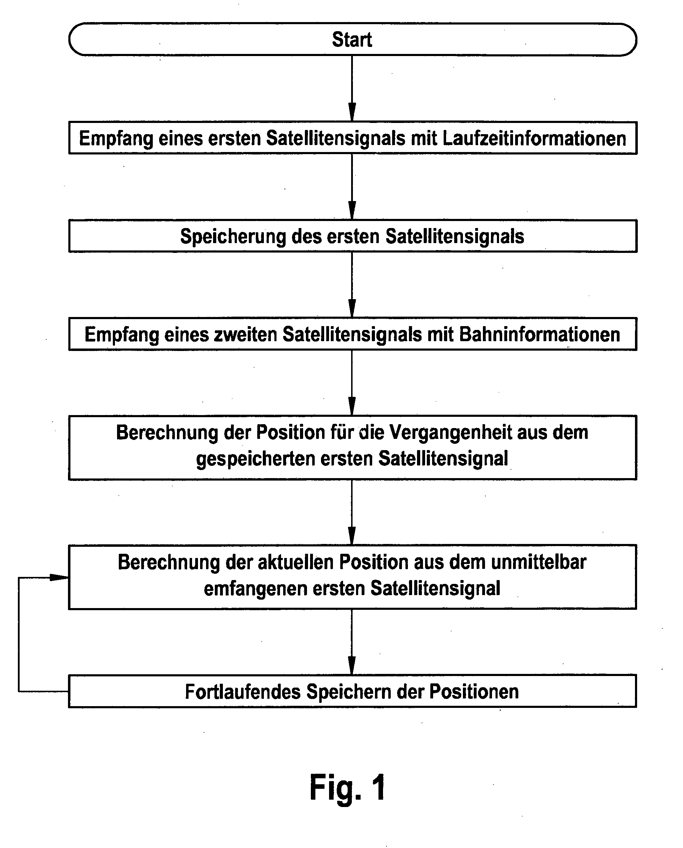

Fig. 1 zeigt eine Ausführungsform des erfindungsgemäß vorgeschlagenen Verfahrens. Nach dem Start einer Empfangseinrichtung, welche Satellitensignale zur Positionsbestimmung empfangen soll, beginnt diese zunächst mit der Suche nach geeigneten Satellitensignalen. Diese Signalsuche benötigt typischerweise einen Zeitraum von wenigen Sekundenbruchteilen bis zu einigen Sekunden. Sobald Satellitensignale vom Empfänger gefunden wurden, werden die vom Satelliten gesendeten Signale empfangen.

Ein erstes Satellitensignal umfasst dabei eine Information, welche die Bestimmung der Laufzeit des Signals zum Sender bis zum Empfänger ermöglicht. Diese Laufzeitinformation kann beispielsweise eine vorgebbare Codefolge sein, welche sich in vorgebbaren Zeitabständen wiederholt. Insbesondere kann eine solche Codefolge eine Gold-Folge enthalten, welche beispielsweise in einem linear rückgekoppelten Schieberegister erzeugt wurde.

Das empfangene erste Satellitensignal wird mit einem Zeitbezug, z.B. der Empfangszeit gemäß der Uhr des Empfängers, in einem zugeordneten Speicher des Empfängers abgelegt. Hierzu kann beispielsweise vorgesehen sein, das empfangene Signal auf eine niedrigere Frequenz zu transformieren. Weiterhin kann vorgesehen sein, das empfangene Signal vor der Speicherung mittels eines A/D-Wandlers zu digitalisieren. In einer weiteren Ausführungsform der Erfindung kann vorgesehen sein, vor der Speicherung des Signals das aufgeprägte Bitmuster zu decodieren und/oder die Trägersignalphase zu bestimmen und nur ausgewählte Teile des Signals zu speichern. Die gespeicherten Daten können dabei mit Zusatzinformationen versehen werden, beispielsweise der Signalstärke.

In Abhängigkeit der gewünschten Genauigkeit der Position und in Abhängigkeit davon, ob eine eindimensionale, eine zweidimensionale oder eine dreidimensionale Positionsbestimmung gefordert ist, werden in der oben bezeichneten Weise die Signale von mindestens zwei, mindestens drei oder mindestens vier Satelliten gespeichert. Fallweise können auch die Signale weiterer Satelliten gespeichert werden, um die Genauigkeit der Positionsbestimmung zu erhöhen.

Zeitgleich oder sequentiell mit dem Empfang des ersten Satellitensignals mit Laufzeitinformationen empfängt der Empfänger ein zweites Satellitensignal mit Bahninformationen, welche den Satelliten betreffen, von welchem das Signal mit Laufzeitinformationen empfangen wird. Insbesondere kann das erste und das zweite Satellitensignal auch durch ein einziges physikalisches Signal gebildet werden, auf welchem beide Informationen aufmoduliert sind. Ein erstes und ein zweites Satellitensignal im Sinne der vorliegenden Erfindung bezeichnet daher nicht zwingend zwei physikalisch getrennte Signale, sondern zwei logische Signale bzw. zwei Layer eines Signals.

Die für den Empfang der Bahninformationen erforderliche Zeit bestimmt sich dabei nach der Signalqualität, also insbesondere nach dem Signal/Rauschverhältnis, einer Dopplerverschiebung der Empfangsfrequenz durch Bewegung und der Sichtverbindung zum sendenden Satelliten. Beispielsweise kann die Signalqualität durch Abschirmung oder durch Mehrfachreflexion an der Geländetopographie oder an Gebäuden verschlechtert werden. Der Empfang der Bahninformationen kann als abgeschlossen gelten, wenn die Bahninformationen vollständig empfangen und die Prüfsumme der empfangen Informationen verifiziert wurde. Bei höherer Anforderung an die Genauigkeit kann jedoch auch ein mehrfacher Empfang derselben Informationen und ein bitweiser Vergleich dieser Informationen gefordert werden. Dadurch verlängert sich der für die Bereitstellung der Bahninformationen erforderlich Zeitraum.

Bei einem Satellitensignal eines NAVSTAR-GPS-Satelliten werden die Bahndaten in zwölf Sekunden übertragen, wobei sich die Aussendung der Bahndaten alle 30 sek. wiederholt. Somit erfordert der Empfang der Bahninformationen mindestens 12 sek., der doppelte Empfang zumindest 42 sek. Sofern eine höhere Redundanz gefordert wird, erhöht sich die zum Empfang erforderliche Zeit um entsprechende Vielfache des Sendezyklus.

Nach Vorliegen der Bahninformationen können die gespeicherten Satellitensignale für die Vergangenheit ausgewertet werden. Diese Auswertung umfasst die Berechnung von zumindest einer Position für die Vergangenheit. In Abhängigkeit des gewünschten Anwendungszweckes können auch mehrere Positionen bestimmt werden, um einen zurückgelegten Weg zu rekonstruieren. In einer Weiterbildung der Erfindung kann auch die Geschwindigkeit entlang dieses Weges bestimmt werden. Die Positionen für die Vergangenheit stehen nun zur weiteren Verarbeitung zur Verfügung. Beispielsweise können die Positionen auf einem Display dem Benutzer des Empfängers angezeigt werden. Alternativ oder kumulativ können die Positionen auch in einen Speicher abgelegt oder über eine Schnittstelle auf ein Computersystem übertragen werden. Bei der Schnittstelle zur Übertragung kann es sich um eine drahtlose Schnittstelle handeln, beispielsweise ein UMTS- oder GSM-Netz.

Sofern zusätzlich zur Position in der Vergangenheit noch weitere, fortlaufende Positionen benötigt werden, kann parallel zur Berechnung der Position für die Vergangenheit weiterhin ein erstes Satellitensignal mit Laufzeitinformationen empfangen werden. Dieses Signal kann entweder ebenfalls in der Speichereinrichtung abgelegt werden, so dass diese nach Art eines FIFO-Stack die Daten dem Rechenwerk zu Berechnung der Position zuführt. In einer anderen Ausführungsform der Erfindung kann jedoch auch vorgesehen sein, die empfangenen Daten mit Laufzeitinformationen nach vollständigem Empfang der Bahninformationen unter Umgehung des Speichers dem Rechenwerk direkt zu Berechnung der Position zuzuführen.

Aus den weiter empfangenen Signalen mit Laufzeitinformationen können nun fortlaufend aktuelle Positionen berechnet und falls gewünscht plausibilisiert werden. Auch diese fortlaufend berechneten Positionen werden fortlaufend im Speicher abgelegt und können dort dem Benutzer visualisiert und/oder auf ein externes Computersystem übertragen werden. Somit kann der gesamte, seit dem Einschalten des Empfängers zurückgelegte Weg rekonstruiert werden.

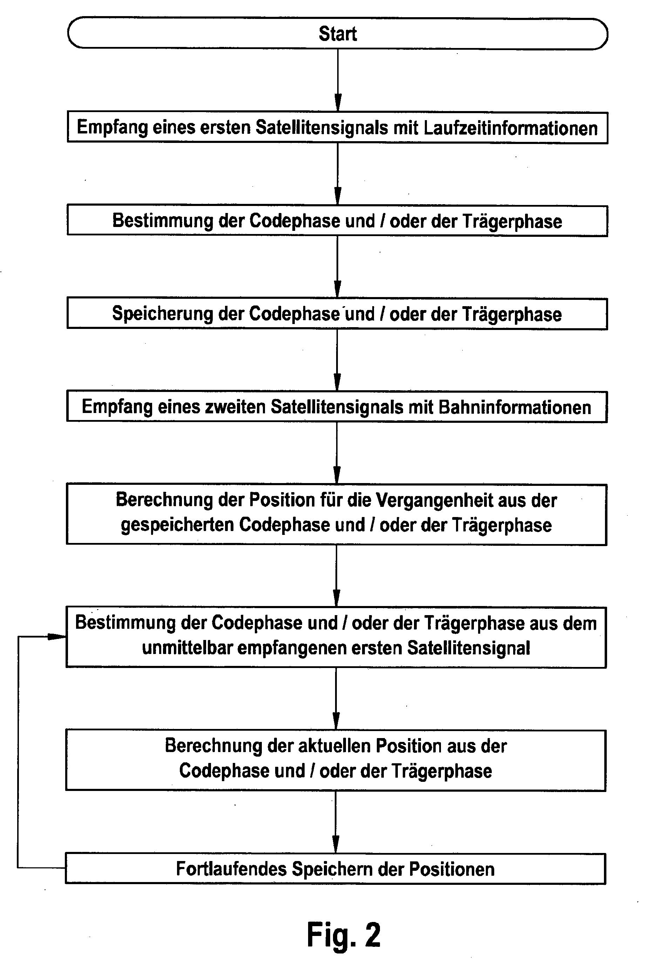

Eine weitere Ausführungsform der Erfindung gemäß Fig. 2 sieht ebenfalls vor, nach dem Start eines entsprechenden Empfängers ein erstes Satellitensignal mit Laufzeitinformationen zu empfangen.

Zur Speicherung sind gemäß Fig. 2 jedoch nicht die gesamten Rohdaten vorgesehen, sondern lediglich eine Unterauswahl dieser Daten, beispielsweise eine Codephase und/oder eine Trägerphase. Hierzu werden die zur Speicherung vorgesehenen Daten vor der Speicherung bestimmt. Beispielsweise kann eine Codephase einer gesendeten, an sich bekannten Codefolge dadurch bestimmt werden, dass die empfangene Codefolge mit einer im Empfänger erzeugten, identischen Codefolge verglichen wird. Eine Trägerphase kann durch Vergleich der empfangenen Phase mit einer im Empfänger erzeugten Referenzphase erfolgen. Nachfolgend können die gewünschten Werte in einem Speicher im Empfänger abgelegt werden.

Um eine Rekonstruktion einer Bewegungsrichtung des Empfängers zu ermöglichen, kann vorgesehen sein, eine Codephase und/oder eine Trägerphase der empfangenen Satelliten in vorgebbaren Zeitintervallen zu speichern. Insbesondere beträgt ein solches Zeitintervall 0,001 sek. bis 5 sek. Die Auswahl der Anzahl zu speichernder Satellitensignale erfolgt dabei wie in Zusammenhang mit Fig. 1 beschrieben. Auch bei dieser Ausführungsform können Zusatzdaten wie eine Signalqualität und/oder eine Zeitinformation mit gespeichert werden.

Wie bereits in Zusammenhang mit Fig. 1 beschrieben, wird während dem Empfang eines ersten Satellitensignals ein zweites Satellitensignal mit Bahninformationen empfangen. Wie bereits in Zusammenhang mit Fig. 1 erwähnt, können die Bahninformationen dabei auch auf dasselbe physikalische Trägersignal aufmoduliert werden.

Nachdem die Bahninformationen dem Empfänger zur Verfügung stehen, kann aus der gespeicherten Codephase und/oder der Trägerphase und/oder der Zusatzinformation zumindest eine Position berechnet werden, an welcher sich der Empfänger in der Vergangenheit befunden hat. Zusätzlich kann der Zeitpunkt bestimmt werden, zu welchem sich der Empfänger am berechneten Ort befunden hat.

Diese Positionen für die Vergangenheit werden zusammen mit fortlaufend bestimmten, aktuellen Positionen in einen Speicher abgelegt und können dort wiederum dem Benutzer zur Verfügung gestellt oder auf ein weiteres Computersystem übertragen werden.

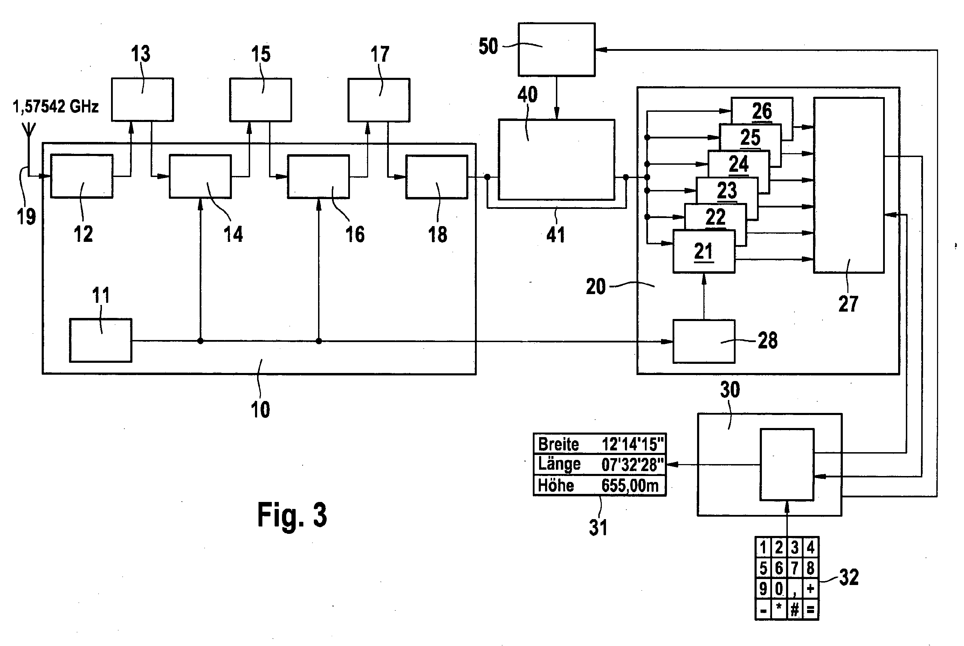

Fig. 3 zeigt ein Ausführungsbeispiel einer erfindungsgemäßen Vorrichtung. Die Vorrichtung besteht dabei aus Datenerfassungsmitteln 10, welche zum Empfang von Satellitensignalen vorgesehen sind. Hierzu steht eine Antenne 19 zur Verfügung. Die Ausgangssignale der Antenne 19 werden in einem rauscharmen Verstärker 12 verstärkt. Im Falle eines NAVSTAR-GPS-Signals steht am Ausgang des Verstärkers 12 ein Signal mit einer Eingangsfrequenz von 1,57542 GHz zur Verfügung.

Das Eingangssignal wird nachfolgend über eine oder mehrere Stufen auf eine Zwischenfrequenz heruntergemischt. Im dargestellten Ausführungsbeispiel nach Fig. 3 sind zwei Mischstufen 14 und 16 dargestellt, wobei das Signal zwischen den Mischstufen durch jeweils ein Filter 13, 15, und 17 gefiltert wird. Die Zwischenfrequenz liegt typischerweise in einem Bereich von etwa 2 MHz bis etwa 50 MHz. Am Ausgang des letzten Filters 17 gelangt das Zwischenfrequenzsignal in einen A/D-Konverter, welcher in der Regel eine Breite von 2 Bit aufweist. Der A/D-Konverter kann getrennte Kanäle für komplexe Signalverarbeitung aufweisen. Das digitalisierte Signal am Ausgang des A/D-Konverters 18 kann entweder in einer Speichereinrichtung 40 zwischengespeichert oder über eine Bypass-Leitung 41 unmittelbar den Datenverarbeitungsmitteln 20 zur Verfügung gestellt werden.

Die Datenverarbeitungsmittel 20 sowie die Datenerfassungsmittel 10 arbeiten mit einem Systemtakt, welcher im Empfänger mit einem Taktgenerator 11 erzeugt wird.

Im Falle des NAVSTAR-GPS-Systems arbeiten sämtliche beteiligte Satelliten auf der identischen nominalen Sendefrequenz. Die Unterscheidung unterschiedlicher Satelliten erfolgt aufgrund unterschiedlicher Codes. Zur Auswertung dieser Signale steht daher in den Datenverarbeitungsmitteln 20 eine Codeerzeugungseinrichtung 28 zur Verfügung, welche dazu eingerichtet ist, denselben Code zu erzeugen, welcher auch über die Antenne 19 und die Datenerfassungsmittel 10 empfangen wird. Die Korrelatoren 21, 22, 23, 24, 25 und 26 sind dazu vorgesehen, die Phasenverschiebung zwischen der Codesequenz des empfangenen Satellitensignals und des mit der Codeerzeugungseinrichtung 28 erzeugten Codes zu ermitteln und an die Datenauswerteeinheit 27 weiterzugeben. Die Anzahl von 6 parallel angeordneten Korrelatoren 21, 22, 23, 24, 25, 26 ist dabei lediglich beispielhaft gewählt. In anderen Ausführungsformen der Erfindung kann eine größere oder eine kleinere Anzahl von Korrelatoren 21, 22, 23, 24, 25, 26 vorgesehen sein. Die Korrelatoren können entweder als elektronische Schaltung (Hardware) oder durch einen FFT-, DFT- oder einen anderen Algorithmus realisiert werden (Software), der auf wenigstens einem Prozessor oder einer anderen Recheneinheit abläuft, beispielsweise einer Zustandsmaschine.

Die Datenauswerteeinheit 27 umfasst beispielsweise einen Mikroprozessor, einen Mikrokontroller oder einen digitalen Signalprozessor. Mittels der Auswerteeinheit 27 wird aus der ermittelten Codephase eine Position bestimmt.

Die so berechnete Position kann an eine Steuereinheit 30 weitergegeben werden, welche beispielsweise eine Anzeige 31 steuert. Weiterhin kann die Steuereinheit 30 dazu vorgesehen sein, Benutzereingaben zu empfangen, beispielsweise über eine Tastatur 32 und damit die Datenauswerteeinheit 27 steuern.

Weiterhin ist die Steuer- und Auswerteeinheit 30 dazu vorgesehen, Datenauswahlmittel 50 zu kontrollieren. Die Datenauswahlmittel 50 sind dazu vorgesehen, einen drohenden Speicherüberlauf des Speichers 40 zu erkennen und selektiv Daten aus dem Speicher 40 auszuwählen und zu löschen. Die Auswahl der Daten wird dabei so vorgenommen, dass die Genauigkeit der mit den gespeicherten Rohdaten ermittelten Position möglichst wenig beeinträchtigt wird.

Beispielsweise können Signale von überzähligen Satelliten gelöscht werden. Dabei werden bevorzugt diejenigen Daten zum Löschen ausgewählt, die beim Empfang eine schlechte Signalqualität aufgewiesen haben. Weiterhin können bevorzugt diejenigen Daten gelöscht werden, bei welchen das Volumens, welches die verbleibenden Satelliten mit der Empfängerposition zusammen im Raum aufspannen, möglichst groß ist. In diesem Fall werden Daten von eng benachbarten Satelliten reduziert, welche die Genauigkeit nur geringfügig erhöhen würden.

Weiterhin können die Daten in größeren Zeitintervallen gespeichert werden bzw. zwischen vorgebbaren Zeitintervallen gespeicherte Daten können aus dem Speicher entfernt werden. In diesem Fall kann die Position eines bewegten Empfängers im gesamten Zeitraum des Betriebes rekonstruiert werden, allerdings mit Lücken, welche größer werden, je mehr Daten gelöscht werden müssen.

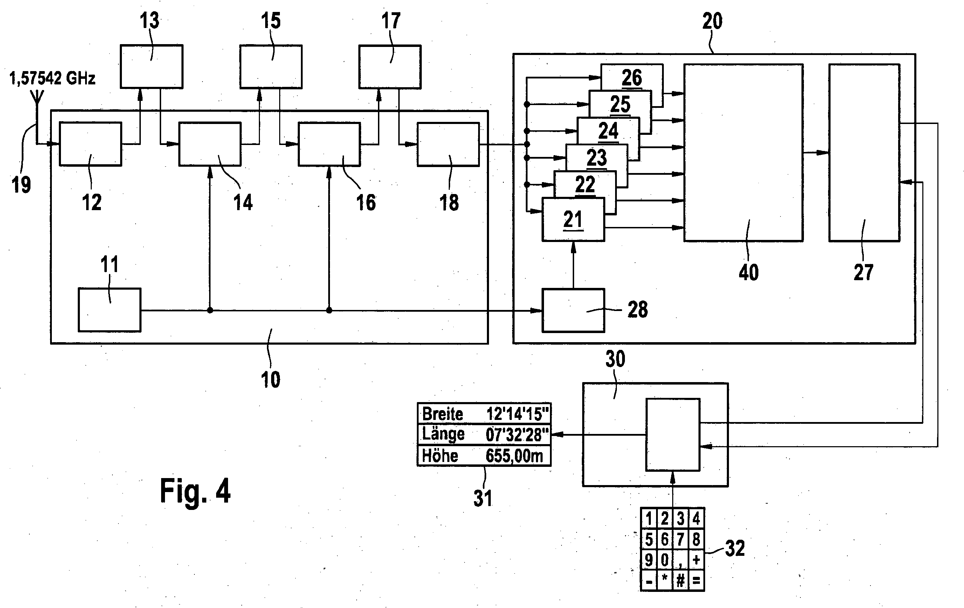

Fig. 4 zeigt eine weitere Ausführungsform der Erfindung. Dabei wirken die Datenerfassungsmittel 10, die Korrelatoren 21, 22, 23, 24, 25, 26, die Code-Erzeugungseinrichtung 28 und die Steuereinrichtung 30 ebenso zusammen, wie im Hinblick auf Fig. 3 erläutert.

Um Speicherplatz zu sparen, wird bei der Ausführungsform gemäß Fig. 4 nicht das vom A/D-Wandler 18 bereitgestellte Rohsignal gespeichert, sondern die mittels der Korrelatoren 21, 22, 23, 24, 25, 26 ermittelte Codephase, welche zusammen mit den Bahndaten zur Positionsbestimmung verwendet werden kann. Daher wird bei dem Vorschlag gemäß Fig. 4 das Zwischenfrequenzsignal auch dann in den Korrelatoren weiterverarbeitet, wenn keine gültigen Bahndaten der Satelliten vorliegen. Die Ausgangssignale der Korrelatoren, also Code- und Trägerphase oder weitere Daten, gelangen zusammen mit der Zuordnung zu dem jeweiligen Satelliten und der Empfangszeit in die Speichereinrichtung 40, welche nach Art eines FIFO- oder LIFO-Stacks die Daten zwischenspeichert.

Sobald gültige Bahndaten der Satelliten vorliegen, beginnt die Auswerteeinheit 28, die Positionen aus den Laufzeitmessungen zu berechnen, z.B. anfangend mit den ältesten oder mit den jüngsten Daten. Wenn die Speichereinrichtung 40 vollständig geleert ist, werden die Daten direkt zur Auswerteeinheit 27 geleitet. Die berechneten Positionen werden mit Zeitbezug weitergegeben.

Selbstverständlich kann auch die Ausführungsform gemäß Fig. 4 mit Auswahlmitteln 50 erweitert werden, wie in Zusammenhang mit Fig. 3 erläutert.

Die Erfindung eignet sich insbesondere zur Verwendung in einem Mauterfassungssystem, einem elektronischen Fahrtenbuch, einem Navigationssystem oder einem elektronischen Tachographen, um die gesamte zurückgelegte Fahrstrecke zu rekonstruieren, auch wenn zu Beginn der Fahrt noch keine Bahndaten der Satelliten zur Verfügung standen. Die gesamte zurückgelegte Fahrstrecke kann dann beispielsweise zur Berechnung der Mautgebühren, zur Rekonstruktion der Fahrstrecke oder zur Bestimmung einer Position auf einer digitalisierten Landkarte verwendet werden.

In einer weiteren Ausführungsform kann die erfindungsgemäß vorgeschlagene Vorrichtung Bestandteil eines Mobiltelefons, einer digitalen Kamera oder eines PDA sein. Dies erlaubt dem Benutzer die Speicherung einer Ortsinformation, ohne den Empfang der vollständigen Bahndaten abzuwarten. Die Ortsinformationen können beispielsweise den Aufnahmestandort eines Fotos, den Ort eines Telefonates oder einen Treffpunkt umfassen.

## Patentansprüche

1. Verfahren zur Bestimmung einer Position mittels eines Empfängers (10) zum Empfang von Satellitensignalen,
- bei welchem die Bahndaten der Satelliten durch mindestens ein von mindestens einem Satelliten ausgesandtes Signal an den Empfänger (10) übermittelt und die Laufzeit mehrerer Satellitensignale gemessen wird, um die Position relativ zur Satellitenposition zu bestimmen,
- wobei zumindest in einem ersten Zeitraum vor dem vollständigen Empfang der Bahndaten der Satelliten ein zur Bestimmung der Laufzeit erforderlicher Teil der von mindestens einem Satelliten ausgesandten Signale gespeichert wird
- und in einem zweiten Zeitraum nach dem vollständigen Empfang der Bahndaten der Satelliten auf der Basis des gespeicherten Teils der Signale zumindest eine Position bestimmt wird, an welcher sich der Empfänger im ersten Zeitraum vor dem vollständigen Empfang der Bahndaten der Satelliten befunden hat, **dadurch gekennzeichnet, dass**
- im ersten Zeitraum von den gesamten von dem Satelliten empfangenen Daten lediglich eine Unterauswahl in Form einer Trägerphase gespeichert wird,
- wobei die Trägerphase die Phasenlage der Trägerfrequenz der vom Satelliten ausgesandten Signale im Empfänger bezüglich einer im Empfänger erzeugten Referenzphase umfasst.

2. Verfahren nach Anspruch 1, **dadurch gekennzeichnet, dass** die von mindestens einem Satelliten ausgesandten Signale zumindest teilweise über eine Zeitspanne von 48 s bis etwa 96 s gespeichert werden.

3. Verfahren nach einem der Ansprüche 1 oder 2, **dadurch gekennzeichnet, dass** die von mindestens einem Satelliten ausgesandten Signale zumindest eine vorgebbare Code-Sequenz enthalten und der Zeitpunkt des Empfangs dieser Code-Sequenz gespeichert wird.

4. Verfahren nach einem der Ansprüche 1 bis 3, **dadurch gekennzeichnet, dass** die gespeicherten Signale von mindestens einem Satelliten zumindest teilweise aus dem Speicher gelöscht werden, wobei diejenigen Daten zum Löschen ausgewählt werden, welche von den gespeicherten Daten die schlechteste Empfangbarkeit aufgewiesen haben und/oder welche die ältesten Daten darstellen und/oder welche in vorgebbaren Zeitintervallen empfangen wurden und/oder welche das Volumen, das die Satelliten mit der Empfängerposition zusammen im Raum aufspannen, so wenig wie möglich verkleinern.

5. Verfahren nach einem der Ansprüche 1 bis 4, **dadurch gekennzeichnet, dass** eine Position, an welcher sich der Empfänger im ersten Zeitraum vor dem vollständigen Empfang der Satellitenstandorte befunden hat, einer Plausibilisierung unterzogen wird.

6. Vorrichtung zur Bestimmung einer Position, enthaltend Datenerfassungsmittel (10) zur Erfassung von Satellitensignalen,
- welche dazu eingerichtet sind, Informationen über Satellitenpositionen durch mindestens ein von mindestens einem Satelliten ausgesandtes Signal zu empfangen und die Laufzeit mehrerer Satellitensignale zu messen,
- wobei Datenverarbeitungsmittel (20) vorgesehen sind, um die Position relativ zum jeweiligen Satellitenstandort zu bestimmen,
- wobei eine Speichereinrichtung (40) vorhanden ist, in welcher zumindest in einem ersten Zeitraum vor dem vollständigen Empfang der Satellitenstandorte ein zur Bestimmung der Laufzeit erforderlicher Teil der von mindestens einem Satelliten ausgesandten Signale speicherbar ist
- und die Datenverarbeitungsmittel (20) dazu eingerichtet sind, in einem zweiten Zeitraum nach dem vollständigen Empfang der Satellitenstandorte auf der Basis des gespeicherten Teils der Signale zumindest eine Position zu bestimmen, an welcher sich die Vorrichtung im ersten Zeitraum vor dem vollständigen Empfang der Satellitenstandorte befunden hat
**dadurch gekennzeichnet, dass**
- im ersten Zeitraum von den gesamten von dem Satelliten empfangenen Daten lediglich eine Unterauswahl in Form einer Trägerphase gespeichert wird,
- wobei die Trägerphase die Phasenlage der Trägerfrequenz der vom Satelliten ausgesandten Signale im Empfänger bezüglich einer im Empfänger erzeugten Referenzphase umfasst.

7. Vorrichtung nach Anspruch 6, **dadurch gekennzeichnet, dass** die Datenerfassungsmittel (10) dazu eingerichtet sind, die von mindestens einem Satelliten empfangenen Signale auf eine Zwischenfrequenz zu transformieren und die Datenverarbeitungsmittel (20) dazu eingerichtet sind, die Signale zu identifizieren und den Zeitpunkt des Empfangs der Speichereinrichtung zuzuführen.

8. Vorrichtung nach Anspruch 6 oder 7, **dadurch gekennzeichnet, dass** Datenauswahlmittel (50) vorgesehen sind, um die gespeicherten Signale von mindestens einem Satelliten zumindest teilweise aus dem Speicher (40) zu löschen, wobei diejenigen Daten zum Löschen auswählbar sind, welche von den gespeicherten Daten die schlechteste Empfangbarkeit aufgewiesen haben und/oder welche die ältesten Daten darstellen und/oder welche in vorgebbaren Zeitintervallen empfangen wurden und/oder welche das Volumen, das die Satelliten mit der Empfängerposition zusammen im Raum aufspannen, so wenig wie möglich verkleinern.

9. Vorrichtung nach einem der Ansprüche 6 bis 8, **dadurch gekennzeichnet, dass** die Datenerfassungsmittel (10) dazu eingerichtet sind, die von mindestens einem Satelliten empfangenen Signale auf eine Zwischenfrequenz zu transformieren und die Phasenlage des empfangenen Signals zu bestimmen und der Speichereinrichtung zuzuführen.

10. Mauterfassungsgerät mit einer Vorrichtung nach einem der Ansprüche 6 bis 9.

11. Mobiltelefon mit einer Vorrichtung nach einem der Ansprüche 6 bis 9.

12. Kamera mit einer Vorrichtung nach einem der Ansprüche 6 bis 9.

13. Navigationsgerät mit einer Vorrichtung nach einem der Ansprüche 6 bis 9.

14. Tachograph mit einer Vorrichtung nach einem der Ansprüche 6 bis 9.

15. Elektronisches Fahrtenbuch mit einer Vorrichtung nach einem der Ansprüche 6 bis 9.

16. Computerprogramm zu Durchführung eines Verfahren nach einem der Ansprüche 1 bis 5, wenn das Computerprogramm auf einem Computer ausgeführt wird.

17. Computerprogramm mit Programmcode, der auf einem maschinenlesbaren Träger gespeichert ist, zur Durchführung des Verfahrens nach einem der Ansprüche 1 bis 5, wenn das Computerprogramm auf einem Computer ausgeführt wird.

## Claims

1. Method for determining a position by means of a receiver (10) for receiving satellite signals,
- in which the orbit data from the satellites are transmitted to the receiver (10) by at least one signal sent by at least one satellite, and the propagation time of a plurality of satellite signals is measured in order to determine the position relative to the satellite position,
- wherein, at least in a first period prior to the complete reception of the orbit data from the satellites, a portion of the signals sent by at least one satellite is stored that is required for determining the propagation time
- and, in a second period following the complete reception of the orbit data from the satellites, the stored portion of the signals is taken as a basis for determining at least one position at which the receiver was located in the first period prior to the complete reception of the orbit data from the satellites, **characterized in that**
- in the first period only a subselection of all of the data received from the satellite is stored in the form of a carrier phase,
- wherein the carrier phase comprises the phase angle of the carrier frequency of the signals sent by the satellite in the receiver with respect to a reference phase produced in the receiver.

2. Method according to Claim 1, **characterized in that** at least some of the signals sent by at least one satellite are stored over a period of between 48 s and approximately 96 s.

3. Method according to either of Claims 1 and 2, **characterized in that** the signals sent by at least one satellite contain at least one prescribable code sequence, and the time of reception of said code sequence is stored.

4. Method according to one of Claims 1 to 3, **characterized in that** at least some of the stored signals from at least one satellite are erased from the memory, wherein those data that, of the stored data, have had the poorest reception capability and/or that are the oldest data and/or that have been received at prescribable intervals of time and/or that reduce the volume that the satellites together with the receiver position cover in space as little as possible are selected for erasure.

5. Method according to one of Claims 1 to 4, **characterized in that** a position at which the receiver was located in the first period prior to the complete reception of the satellite locations is subjected to plausabilization.

6. Apparatus for determining a position, containing data acquisition means (10) for acquiring satellite signals,
- which are set up to receive information about satellite positions by means of at least one signal sent by at least one satellite and to measure the propagation time of a plurality of satellite signals,
- wherein data processing means (20) are provided in order to determine the position relative to the respective satellite location,
- wherein a memory device (40) is in place that can be used, at least in a first period prior to the complete reception of the satellite locations, to store a portion of the signals sent by at least one satellite that is required for determining the propagation time
- and the data processing means (20) are set up to take, in a second period following the complete reception of the satellite locations, the stored portion of the signals as a basis for determining at least one position at which the apparatus was located in the first period prior to the complete reception of the satellite locations,
**characterized in that**
- in the first period only a subselection of all of the data received from the satellite is stored in the form of a carrier phase,
- wherein the carrier phase comprises the phase angle of the carrier frequency of the signals sent by the satellite in the receiver with respect to a reference phase produced in the receiver.

7. Apparatus according to Claim 6, **characterized in that** the data acquisition means (10) are set up to transform the signals received from at least one satellite into an intermediate frequency and the data processing means (20) are set up to identify the signals and to supply the time of reception to the memory device.

8. Apparatus according to Claim 6 or 7, **characterized in that** data selection means (50) are provided in order to erase at least some of the stored signals from at least one satellite from the memory (40), wherein those data that, of the stored data, have had the poorest reception capability and/or that are the oldest data and/or that have been received at prescribable intervals of time and/or that reduce the volume that the satellites together with the receiver position cover in space as little as possible can be selected for erasure.

9. Apparatus according to one of Claims 6 to 8, **characterized in that** the data acquisition means (10) are set up to transform the signals received from at least one satellite into an intermediate frequency and to determine the phase angle of the received signal and to supply said phase angle to the memory device.

10. Toll collection appliance having an apparatus according to one of Claims 6 to 9.

11. Mobile telephone having an apparatus according to one of Claims 6 to 9.

12. Camera having an apparatus according to one of Claims 6 to 9.

13. Navigation appliance having an apparatus according to one of Claims 6 to 9.

14. Tachograph having an apparatus according to one of Claims 6 to 9.

15. Electronic logbook having an apparatus according to one of Claims 6 to 9.

16. Computer program for carrying out a method according to one of Claims 1 to 5 when the computer program is executed on a computer.

17. Computer program having program code, which is stored on a machine-readable storage medium, for carrying out the method according to one of Claims 1 to 5 when the computer program is executed on a computer.

## Revendications

1. Procédé de détermination d'une position au moyen d'un récepteur (10) destiné à recevoir des signaux satellites, dans lequel
les données de piste des satellites sont transmises au récepteur (10) par au moins un signal émis par au moins un satellite et le temps de parcours de plusieurs signaux de satellite est mesuré pour déterminer la position par rapport à la position des satellites,
des données de piste des satellites, une partie des signaux nécessaires pour déterminer le temps de parcours et émis par au moins un satellite pendant au moins une première durée qui précède la réception complète est conservée en mémoire et
dans une deuxième durée qui suit la réception complète des données de piste des satellites, sur la base de la partie conservée en mémoire, au moins une position à laquelle le récepteur se trouvait pendant la première durée qui précède la réception complète des données de piste est déterminée,
**caractérisé en ce que**
au cours de la première durée, parmi l'ensemble des données reçues du satellite, seule une partie sélectionnée est conservée en mémoire sous la forme d'une phase porteuse et
**en ce que** la phase porteuse comprend le déphasage de la fréquence porteuse des signaux émis par le satellite dans le récepteur par rapport à une phase de référence formée dans le récepteur.

2. Procédé selon la revendication 1, **caractérisé en ce que** les signaux émis par au moins un satellite sont conservés en mémoire au moins en partie pendant une durée de 48 s à environ 96 s.

3. Procédé selon l'une des revendications 1 ou 2, **caractérisé en ce que** les signaux émis par au moins un satellite contiennent au moins une séquence de code prédéterminée et **en ce que** l'instant de la réception de cette séquence de code est conservé en mémoire.

4. Procédé selon l'une des revendications 1 à 3, **caractérisé en ce que** les signaux provenant d'au moins un satellite et conservés en mémoire sont effacés au moins en partie de la mémoire, les données sélectionnées pour l'effacement étant celles qui ont présenté parmi les données conservées en mémoire la plus mauvaise réception et/ou celles qui représentent les données les plus anciennes et/ou celles qui ont été reçues pendant des intervalles de temps prédéterminés et/ou celles qui diminuent aussi peu que possible le volume que le satellite et la position du récepteur sous-tendent ensemble dans l'espace.

5. Procédé selon l'une des revendications 1 à 4, **caractérisé en ce qu'**une position à laquelle le récepteur se trouvait au cours de la première durée qui précède la réception complète de l'emplacement du satellite subit un examen de plausibilité.

6. Dispositif de détermination d'une position, contenant des moyens (10) de saisie de données qui saisissent des signaux de satellite,
ces moyens étant conçus pour recevoir des informations concernant les positions des satellites par au moins un signal émis par au moins un satellite et pour mesurer le temps de parcours de plusieurs signaux de satellite,
des moyens (20) de traitement de données étant prévus pour déterminer la position par rapport à chaque emplacement de satellite,
un dispositif de mémoire (40) dans lequel une partie des signaux émis au moins pendant une première durée qui précède la réception complète des emplacements de satellite par au moins un satellite et nécessaires pour déterminer le temps de parcours peut être conservée en mémoire étant prévu,
les moyens (20) de traitement de données étant conçus pour, dans une deuxième durée qui suit la réception complète des emplacements de satellite, sur la base de la partie conservée en mémoire des signaux, déterminer au moins une position à laquelle le dispositif se trouvait au cours de la première durée qui précède la réception complète des emplacements de satellite,
**caractérisé en ce que**
au cours de la première durée, parmi l'ensemble des données reçues en provenance du satellite, seule une partie sélectionnée est conservée en mémoire sous la forme d'une phase porteuse et
**en ce que** la phase porteuse comprend le déphasage de la fréquence porteuse des signaux émis par le satellite dans le récepteur par rapport à une phase de référence formée dans le récepteur.

7. Dispositif selon la revendication 6, **caractérisé en ce que** les moyens (10) de saisie de données sont conçus pour transformer à une fréquence intermédiaire les signaux reçus en provenance d'au moins un satellite, les moyens (20) de traitement de données étant conçus pour identifier les signaux et amener au dispositif de mémoire l'instant de la réception.

8. Dispositif selon les revendications 6 ou 7, **caractérisé en ce qu'**il présente des moyens (50) de sélection de données qui effacent au moins en partie de la mémoire (40) les signaux conservés en mémoire, les données sélectionnées pour l'effacement étant celles qui ont présenté la plus mauvaise réception parmi les données conservées en mémoire et/ou celles qui représentent les données les plus anciennes et/ou celles qui ont été reçues pendant des intervalles de temps prédéterminés et/ou celles qui diminuent aussi peu que possible le volume sous-tendu par les satellites et la position du récepteur dans l'espace.

9. Dispositif selon l'une des revendications 6 à 8, **caractérisé en ce que** les moyens (10) de saisie de données sont conçus pour transformer à une fréquence intermédiaire les signaux reçus en provenance d'au moins un satellite, pour déterminer le déphasage du signal reçu et pour l'amener au dispositif de mémoire.

10. Appareil de saisie de péage doté d'un dispositif selon l'une des revendications 6 à 9.

11. Téléphone mobile doté d'un dispositif selon l'une des revendications 6 à 9.

12. Caméra dotée d'un dispositif selon l'une des revendications 6 à 9.

13. Appareil de navigation doté d'un dispositif selon l'une des revendications 6 à 9.

14. Tachygraphe doté d'un dispositif selon l'une des revendications 6 à 9.

15. Carnet de route électronique doté d'un dispositif selon l'une des revendications 6 à 9.

16. Programme informatique en vue de l'exécution d'un procédé selon l'une des revendications 1 à 5 lorsque le programme informatique est exécuté sur un ordinateur.

17. Programme informatique doté d'un code de programme conservé en mémoire sur un support lisible par machine en vue de la mise en oeuvre du procédé selon l'une des revendications 1 à 5 lorsque le programme informatique est exécuté sur un ordinateur.
